# EUROPÄISCHE PATENTSCHRIFT

(11) **EP 0 498 320 B1**
(45) Veröffentlichungstag und Bekanntmachung des Hinweises auf die Patenterteilung: **08.05.1996**
(21) Anmeldenummer: 92101676.2
(22) Anmeldetag: 01.02.1992
(51) Int. Cl.: G02B 6/12, G02B 6/30

(54) **Optischer Wellenleiterübergang**
Transition of optical waveguides
Transition de guides d'ondes lumineuses

(30) Priorität: 08.02.1991 DE 4103896
(43) Veröffentlichungstag der Anmeldung: 12.08.1992
(73) Patentinhaber: ROBERT BOSCH GMBH, 70442 Stuttgart (DE)
(72) Erfinder: Schwander, Thomas, Dipl.-Ing., W-7150 Backnang (DE); Hirche, Klaus, Dipl.-Ing., W-7000 Stuttgart 50 (DE); Hirth, Helmut, Dr. rer. nat., W-7150 Backnang (DE); Schmitt, Reinhold, Dr. rer. nat., W-7152 Aspach-Rietenau (DE)

(56) Entgegenhaltungen:
- US-A- 4 773 720
- APPLIED PHYSICS LETTERS, Bd. 55, Nr. 23, 4. Dezember 1989, New York US, Seiten 2389-2391; Y. SHANI et al. : "Efficient coupling of a semiconductor laser to an optical fiber by means of a tapered waveguide on silicon"
- PATENT ABSTRACTS OF JAPAN vol. 12, no. 331 (P-755) 7. September 1988 ; & JP-A-63 094 205

## Beschreibung

Die vorliegende Erfindung betrifft einen optischen Wellenleiterübergang, bei dem zwei mit Querschnittsänderungen versehene planare Wellenleiter miteinander gekoppelt sind, so daß darüber sich ausbreitende Wellen eine Feldweitenänderung von einer kleinen Feldweite an einem Ende des Wellenleiterübergangs auf eine große Feldweite am gegenüberliegenden Ende und umgekehrt erfahren.

Ein derartiger planarer optischer Wellenleiterübergang, welcher einen Übergang von einem Wellenleiter mit geringer Feldweite auf einen Wellenleiter mit größerer Feldweite darstellt, ist beispielsweise aus IEEE Photonics Technology Letters, Vol. No. 2, Febr. 1990, S. 88 - 90 bekannt. Die Feldaufweitung, bzw. umgekehrt die Feldkonzentration wird durch entsprechende Dickenänderung (Tapern) der wellenführenden Epitaxieschichten erzielt. Die Realisierung von Schichtdickenänderungen ist allerdings technologisch sehr problematisch und kaum reproduzierbar.

Aus Appl. Phys. Lett., Vol. 55, No. 23, 4. Dez. 1989, S. 2389-2391 ist ein optischer Wellenleiterübergang von einem Laser auf eine optische Faser bekannt. Dabei ist in einem ersten planaren Wellenleiter mit einem an die Faser angepaßten Querschnitt ein zweiter getaperter Wellenleiter mit einem kleinen an den Laser angepaßten Querschnitt angeordnet.

Ein Wellenleiterübergang zwischen verschieden großen optischen Feldweiten, bei dem sich zwei getaperte planare optische Wellenleiter unterschiedlicher Breite teilweise überlappen, ist aus US 4,773,720 bekannt.

Der Erfindung liegt daher die Aufgabe zugrunde, einen optischen Wellenleiterübergang der eingangs genannten Art anzugeben, der möglichst dämpfungsarm ist und der mit den üblichen Epitaxie- und Strukturierungsverfahren gut reproduzierbar hergestellt werden kann.

Erfindungsgemäß wird diese Aufgabe durch die Merkmale des Anspruchs 1 gelöst. Vorteilhafte Weiterbildungen der Erfindung gehen aus den Unteransprüchen hervor.

Ein nach der Erfindung realisierter optischer Wellenleiterübergang zeichnet sich durch sehr geringe Strahlungsverluste und Reflexionen aus, was darauf zurückzuführen ist, daß der stärker wellenführende Wellenleiter mit dem kleineren Querschnitt keine abrupten Querschnittsübergänge aufweist und sich der schwach wellenführende Wellenleiter großen Querschnitts allmählich von der Seite her dem anderen Wellenleiter nähert und von diesem die Wellenführung übernimmt.

Anhand mehrerer in der Zeichnung dargestellter Ausführungsbeispiele wird nun die Erfindung näher erläutert. Es zeigen:
- Fig. 1: einen Querschnitt durch ein Substrat mit einem darin geätzten Graben,
- Fig. 2: das Substrat gemäß Fig. 1 mit einer in den Graben eingebrachten Rippe eines Rippenwellenleiters großen Querschnitts,
- Fig. 3: ein in die Rippe gemäß Fig. 2 eingeätzter Graben für die Rippe eines weiteren Rippenwellenleiters kleinen Querschnitts,
- Fig. 3a: eine perspektivische Darstellung der Anordnung gemäß Fig. 3,
- Fig. 4: einen Querschnitt durch das Substrat nach Fertigstellung des Rippenwellenleiters kleineren Querschnitts,
- Fig. 5 a,b: perspektivische Darstellungen der Anordnung gemäß Fig. 4 mit unterschiedlich geformten Rippenwellenleitern kleinen Querschnitts,
- Fig. 6 a,b: perspektivische Darstellungen der Anordnungen gemäß Fig. 5a, b nach Fertigstellung des Rippenwellenleiters großen Querschnitts und
- Fig. 7: einen Querschnitt durch einen komplett fertiggestellten Wellenleiterübergang.

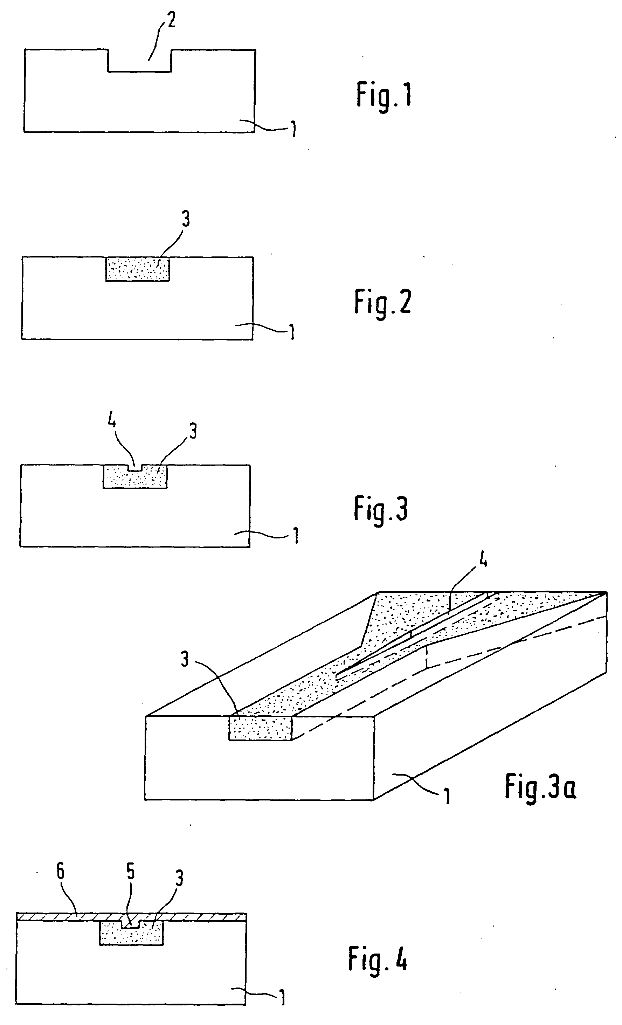

Nachfolgend wird ein optischer Wellenleiterübergang beschrieben, der eine verlustarme Ankopplung z.B. einer Lichtleitfaser an einen planaren Wellenleiter einer integrierten optischen Schaltung ermöglicht, wobei der planare Wellenleiter eine erheblich kleinere transversale Feldweite aufweist als die Lichtleitfaser. Wie dieser Wellenleiterübergang aufgebaut sein kann, soll anhand der erforderlichen Herstellungsprozeßschritte dargelegt werden, welche den Figuren 1 bis 7 zu entnehmen sind.

Der Wellenleiterübergang ist auf einem Substrat 1 (z.B. aus n⁺-InP) realisiert. In einem ersten Prozeßschritt wird, wie ein Querschnitt durch das Substrat 1 in Fig. 1 zeigt, ein Graben 2 in das Substrat 1 geätzt, der sich in die vorgesehene Wellenausbreitungsrichtung erstreckt. Dessen Querschnitt kann sich entlang der Wellenausbreitungsrichtung so ändern, daß ein möglichst homogener Feld-Übergang erzielt wird. Darauf wird entsprechend der Darstellung in Fig. 2 dieser Graben 2 mit einem optisch wirksamen Material (z.B. n⁻-InP) geringfügig höherer Brechzahl als das Substrat besitzt zugewachsen, wodurch eine Rippa 3 eines im Laufe des weiteren Verfahrens entstehenden Rippenwellenleiters gebildet wird. Der Querschnitt dieses Rippenwellenleiters ist an einem Ende des Wellenleiterübergangs so groß zu wählen, daß seine Feldweite an die eines anzukoppelnden Wellenleiters (z.B. Lichtleitfaser) angepaßt ist.

Im nächsten Prozeßschritt wird in die Rippe 3 ein Graben 4 eingeätzt, der zu einem Rippenwellenleiter gehört, dessen Querschnitt erheblich kleiner ist als der zuvor ervähnte Rippenwellenleiter. Der in Fig. 3a gezeigten perspektivischen Darstellung des Substrats 1 ist zu entnehmen, daß die zum Rippenwellenleiter mit großer Feldweite gehörende Rippe 3 mit ihrem Normalquerschnitt (der an die anzukoppelnde Lichtleitfaser angepaßte Querschnitt) an einem Ende des Wellenleiterübergangs - hier ist es das aus der Zeichenebene herausschauende Ende - beginnt und sich nach einer gewissen Strecke in Richtung auf das gegenüberliegende Ende hin aufweitet. Wie die Fig. 3a zeigt, besitzt die Rippe 3, bevor sie sich aufweitet, eine konstante Breite. Es kann aber auch vor der Aufweitung zunächst eine Breitenverjüngung der Rippe erfolgen, um einen möglichst homogenen Übergang des Feldes von einem Wellenleiter auf den anderen zu erreichen. Die Aufweitung geschieht nur durch Zunahme der Rippenbreite bei konstant gehaltener Rippentiefe. Eine Änderung einer Schichtbreite läßt sich mit den bekannten Epitaxieverfahren mit erheblich geringerem Aufwand realisieren als eine Änderung der Schichtdicke. An dem Ende, zu dem hin sich die Rippe 3 aufweitet, beginnt der Graben 4 für den in einem nächsten Schritt darin einzubringenden Rippenwellenleiter mit einem Querschnitt, der an die erforderliche kleine Feldweite angepaßt ist. In Richtung zum gegenüberliegende Ende des Wellenleiterübergangs hin nimmt der Graben 4 in seiner Breite (bei konstanter Tiefe) allmählich ab bis er ganz verschwindet.

In den Graben 4 läßt man nun, wie Fig. 4 andeutet, die Rippe 5 (z.B. aus InGaAsP) und darüber noch eine Schicht 6 aus dem gleichen Material wie die Rippe 5 wachsen. Die Schicht 6 und die sich darüber erhebende Rippe 5 bilden zusammen den Rippenwellenleiter mit der kleinen Feldweite.

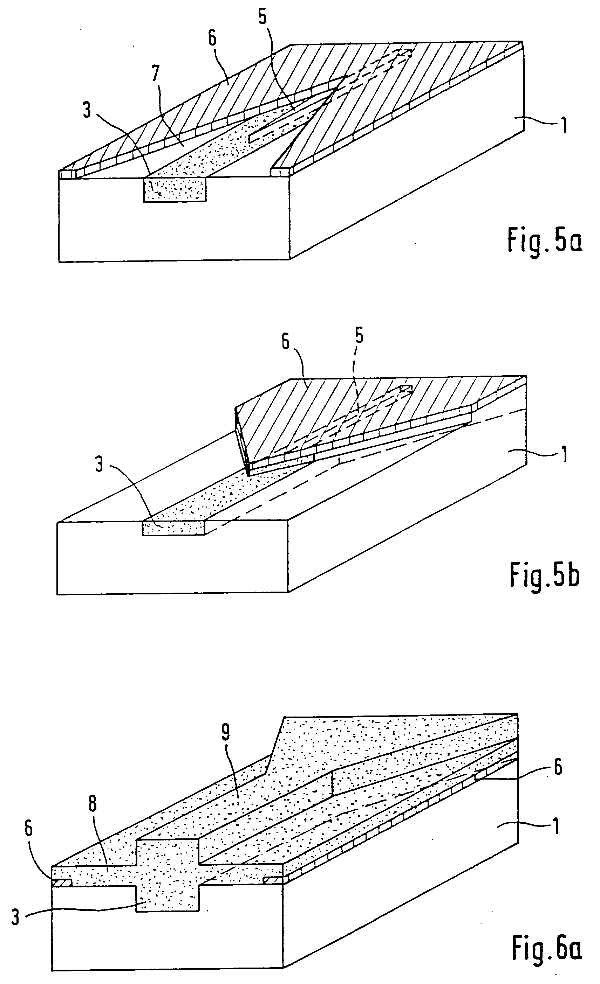

Die in Fig. 5a gezeigte perspektivische Ansicht des mit dem Rippenwellenleiter 5, 6 beschichteten Substrats 1 gibt eine Ausführung der Schicht 6 und der Rippe 5 zu erkennen, die bewirkt, daß dieser Rippenwellenleiter in Richtung auf das Ende des Wellenleiterübergangs mit der großen Feldweite hin allmählich seine wellenführenden Eigenschaften verliert, und die Wellenführung damit vom Rippenwellenleiter mit dem größeren Querschnitt übernommen wird. Die Gestalt der Rippe 5 ist durch den bereits zuvor beschriebenen Verlauf des Grabens 4 festgelegte. In die die Rippe 5 bedeckende Schicht 6 ist eine Aussparung 7 eingeätzt, die sich keilförmig in Richtung zu dem Ende des Wellenleiterübergangs mit der großen Feldweite hin aufweitet, Eine dazu alternative Form der Schicht 6 zeigt die Fig. 5b. Hier nimmt wie die Rippe 5 auch die Schicht 6 bezüglich ihrer Breite in Richtung auf das Ende mit der großen Feldweite ab. Dazu wird zunächst in die Rippe 3 eine durchgehende Rippe 5 konstanter Breite eingelassen und darüber eine das gesamte Substrat bedeckende Schicht 6 aufgebracht. In einem darauffolgenden Ätzvorgang werden die Schicht 6 und die darunter liegende Rippe 5 mitsamt einer der Rippentiefe 5 entsprechenden Schichtdicke der Rippe 3 und des Substrats 1 weggeätzt, so daß die in Fig. 5b dargestellte Keilform des Rippenwellenleiters 5, 6 entsteht.

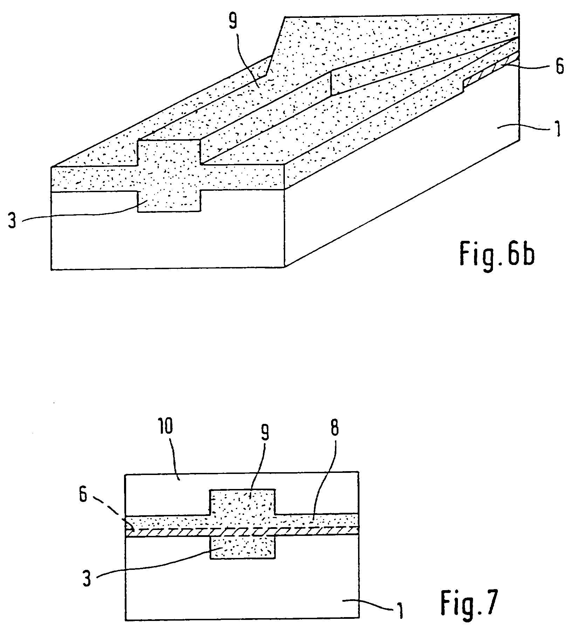

Nachdem nun der Rippenwellenleiter 5, 6 mit der kleinen Feldweite auf dem Substrat 1 fertiggestellt ist, wird darüber eine Schicht 8, aus demselben Material (n⁻-InP) wie die Rippe 3 besteht, aufgewachsen. Diese Schicht 8 ist dicker als der Rippenwellenleiter 5, 6 und bildet zusammen mit der Rippe 3 den oben schon angesprochenen Rippenwellenleiter mit der großen Feldweite. Die Schicht 8 schließt entweder auf der Oberseite planar ab, oder es wird aus ihr, wie Fig. 6a (mit der in Fig. 5a dargestellten Ausführung des Rippenwellenleiters 5, 6) und Fig. 6b (mit der in Fig. 5b dargestellten Ausführung des Rippenwellenleiters 5, 6) zeigen, eine Rippe 9 herausgeätzt, welche der Form der unteren Rippe 3 entspricht. Durch die Verjüngung der Rippe 5 in Richtung der Feldaufweitung verliert der innere Rippenwellenleiter 5,6 seine Wellenführung und der Rippenwellenleiter 3,8,9 großen Querschnitts übernimmt sie und transformiert sie auf die gewünschte Feldweite z.B. einer Glasfaser. Bei Anregung mit der großen Feldweite verhält sich die Anordnung reziprok und konzentriert das Feld in den inneren Wellenleiter 5,6 mit kleiner Feldweite. Durch die zuvor beschriebenen Verläufe und Formen der Rippenwellenleiter werden abrupte Wellenübergänge, die Strahlungsverluste und Reflexionen bewirken, weitgehend vermieden.

Bei Ausführung der Rippe 9 wird noch in einem letzten Prozeßschritt, wie die Fig. 7 zeigt, der Rippenwellenleiter 3, 8, 9 großen Querschnitts mit einer Schicht 10 bedeckt, die vorzugsweise aus dem gleichen Material (z.B.. n⁺-InP) wie das Substrat 1 besteht und einen minimal geringeren Brechungsindex aufweist als der Rippenwellenleiter 3, 8, 9. Dies verbessert die Rotationssymmetrie der Feldverteilung und verbessert die Ankopplung z.B. an eine Glasfaser mit rotationssymmetrischer Feldverteilung.

## Patentansprüche

1. Optischer Wellenleiterübergang mit zwei entlang einer vorgegebenen Richtung hintereinander angeordneten und sich in einem vorgegebenen Bereich überlappenden Schicht-Wellenleitern, die miteinander gekoppelt und jeweils mit Querschnittsänderungen versehen sind, so daß durch die Wellenleiter sich ausbreitende Wellen eine Feldweitenänderung von einer kleinen Feldweite an einem Ende des Wellenleiterübergangs auf eine große Feldweite am gegenüberliegenden Ende und umgekehrt erfahren, dadurch gekennzeichnet, daß einer der beiden Wellenleiter als Rippenwellenleiter (5,6) ausgebildet ist, dessen Rippenbreite in Richtung des Überganges von der kleinen Feldweite auf die große Feldweite bei konstant gehaltener Rippentiefe abnimmt und daß die Rippe (5) des Rippenwellenleiters (5,6) teilweise einen Bereich der Schicht des anderen Wellenleiters (3) ersetzt, und daß die Schichtbreite bei konstant gehaltener Schichttiefe des anderen Wellenleiters in Richtung des Überganges von der großen Feldweite auf die kleine Feldweite zunimmt.

2. Optischer Wellenleiterübergang nach Anspruch 1, dadurch gekennzeichnet, daß in die Schicht (6) des Rippenwellenleiters eine Aussparung (7) eingelassen ist, die sich keilförmig in Richtung auf das Ende des Wellenleiterübergangs mit der großen Feldweite hin aufweitet.

3. Optischer Wellenleiterübergang nach Anspruch 1, dadurch gekennzeichnet, daß sowohl die Breite der Schicht (6) als auch die Breite der Rippe (5) des Rippenwellenleiters in Richtung auf das Ende des Wellenleiterübergangs mit der großen Feldweite hin allmählich abnehmen.

4. Optischer Wellenleiterübergang nach Anspruch 1, dadurch gekennzeichnet, daß der andere Wellenleiter ebenfalls ein Rippenwellenleiter ist, der aus einer wellenleitenden Schicht (8) mit einer sich auf einer Schichtseite erstreckenden Rippe (3) besteht, wobei die Schicht des einen Rippenwellenleiters (5) einen Bereich der Schicht (8) des anderen Rippenwellenleiters ersetzt.

5. Optischer Wellenleiterübergang nach Anspruch 1, dadurch gekennzeichnet, daß der andere Wellenleiter ebenfalls ein Rippenwellenleiter ist, der aus einer wellenleitenden Schicht (8) mit einer sich auf einer Schichtseite erstreckenden Rippe (3) besteht, wobei sich auf der gegenüberliegenden Schichtseite ebenfalls eine Rippe (9) erstreckt, wobei die Schicht des einen Rippenwellenleiters (5) einen Bereich der Schicht (8) des anderen Rippenwellenleiters ersetzt.

6. Optischer Wellenleiterübergang nach Anspruch 5, dadurch gekennzeichnet, daß die Breite jeder Rippe (3,9) des anderen Rippenwellenleiters in Richtung des Überganges von der großen auf die kleine Feldweite zunimmt.

## Claims

1. Optical waveguide transition, having two layer waveguides which are arranged one behind the other along a prescribed direction and overlap in a prescribed region, are coupled to each other and are in each case provided with changes in cross-section, so that waves being propagated through the waveguides experience a change in field width from a small field width at one end of the waveguide transition to a large field width at the opposite end and vice versa, characterized in that one of the two waveguides is designed as a ribbed waveguide (5,6), of which the rib width decreases in the direction of the transition from the small field width to the large field width, the rib depth being kept constant, and in that the rib (5) of the ribbed waveguide (5,6) partially replaces a region of the layer of the other waveguide (3), and in that the layer width increases in the direction of the transition from the large field width to the small field width, the layer depth of the other waveguide being kept constant.

2. Optical waveguide transition according to Claim 1, characterized in that there is let into the layer (6) of the ribbed waveguide a recess (7) which widens in a wedge shape in the direction of the end of the waveguide transition having the large field width.

3. Optical waveguide transition according to Claim 1, characterized in that both the width of the layer (6) and the width of the rib (5) of the ribbed waveguide gradually decrease in the direction of the end of the waveguide transition having the large field width.

4. Optical waveguide transition according to Claim 1, characterized in that the other waveguide is likewise a ribbed waveguide, which comprises a waveguiding layer (8) having a rib (3) extending on one side of the layer, the layer of the one ribbed waveguide (5) replacing a region of the layer (8) of the other ribbed waveguide.

5. Optical waveguide transition according to Claim 1, characterized in that the other waveguide is likewise a ribbed waveguide, which comprises a rib (3) extending on one side of the layer, a rib (9) likewise extending on the opposite side of the layer, the layer of the one ribbed waveguide (5) replacing a region of the layer (8) of the other ribbed waveguide.

6. Optical waveguide transition according to Claim 5, characterized in that the width of each rib (3,9) of the other ribbed waveguide increases in the direction of the transition from the large to the small field width.

## Revendications

1. Transition de guides d'ondes optique ayant deux guides d'ondes en couches prévus l'un derrière l'autre dans une direction prédéterminée et se chevauchant dans une zone donnée, ces guides d'ondes étant couplés l'un à l'autre et ayant des variations de section, de sorte que les ondes qui se développent dans les guides d'ondes subissent une variation de largeur de champ passant d'une petite largeur de champ à une extrémité de la transition des guides d'ondes, à une grande largeur de champ à l'extrémité opposée, et inversement, caractérisée en ce que l'un des deux guides d'ondes est un guide d'ondes à nervure (5, 6) dont la largeur de nervure diminue en direction de la transition d'une petite largeur de champ à une grande largeur de champ, la profondeur de la nervure restant constante, et en ce que la nervure (5) du guide d'ondes à nervure (5, 6) remplace partiellement une zone de la couche de l'autre guide d'ondes (3) et la largeur de la couche, pour une profondeur de couche maintenue constante de l'autre guide d'ondes, augmente en direction du passage de la grande largeur de champ à la petite largeur de champ.

2. Transition de guides d'ondes optiques selon la revendication 1, caractérisée en ce qu'une cavité (7) est réalisée dans la couche (6) du guide d'ondes à nervure, cette cavité s'élargissant suivant une forme de coin en direction de l'extrémité du passage des guides d'ondes vers la grande largeur de champ.

3. Transition de guides d'ondes optiques selon la revendication 1, caractérisée en qu'à la fois la largeur de la couche (6) et la largeur de la nervure (5) du guide d'ondes à nervure diminuent progressivement en direction de l'extrémité du passage des guides d'ondes à grande largeur de champ.

4. Transition de guides d'ondes optiques selon la revendication 1, caractérisée en ce que l'autre guide d'ondes est également un guide d'ondes à nervure composé d'une couche (8) de guide d'ondes avec une nervure (3) s'étendant sur une face de la couche, et la couche de l'un des guides d'ondes à nervures (5) remplace celle l'autre guide d'ondes à nervure au niveau de la couche (8).

5. Transition de guides d'ondes optiques selon la revendication 1, caractérisée en ce que l'autre guide d'ondes est également un guide à nervure composé d'une couche de guide d'ondes (8) avec une nervure (3) s'étendant sur un côté de la couche, et, sur le côté opposé de la couche, il y a également une nervure (9), la couche de l'un des guides d'ondes à nervure (5) remplaçant celle de l'autre guide d'ondes à nervure dans la zone de la couche (8).

6. Transition de guides d'ondes, optique selon la revendication 5, caractérisée en ce que la largeur de chaque nervure (3, 9) de l'autre guide d'ondes à nervure augmente dans la direction du passage de la grande largeur de champ vers la petite largeur de champ.
